(19) Europäisches Patentamt
European Patent Office
Office européen des brevets

(11) Veröffentlichungsnummer: **0 239 846**
**B1**

(12) **EUROPÄISCHE PATENTSCHRIFT**

(45) Veröffentlichungstag der Patentschrift: **14.11.90**

(51) Int. Cl.$^5$: **H 01 M 4/02,** D 01 F 11/10

(21) Anmeldenummer: **87103586.1**

(22) Anmeldetag: **12.03.87**

(54) **Flexible, elektrisch leitfähige Verbundkörper, Verfahren zu ihrer Herstellung und ihre Verwendung.**

(30) Priorität: **21.03.86 DE 3609646**

(43) Veröffentlichungstag der Anmeldung:
**07.10.87 Patentblatt 87/41**

(45) Bekanntmachung des Hinweises auf die Patenterteilung:
**14.11.90 Patentblatt 90/46**

(84) Benannte Vertragsstaaten:
**DE FR GB**

(56) Entgegenhaltungen:
**EP-A-0 076 119**
**US-A-4 233 378**

**PATENT ABSTRACTS OF JAPAN, Band 8, Nr. 29 (E-226)1466r, 7. Februar 1984; & JP-A-58 189 968 (SANYO DENKI K.K.) 05-11-1983**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Feldhues, Michael Dr.**
**Königsteiner Strasse 1a**
**D-6232 Bad Soden am Taunus (DE)**

(56) Entgegenhaltungen:
**CHEMICAL ABSTRACTS, Band 99, Nr. 24, 12. Dezember 1983, Seite 60, Zusammenfassung Nr. 196277g, Columbus, Ohio, US; & JP-A-58 89 639 (TEIJIN LTD) 28-05-1983**

**CHEMICAL ABSTRACTS, Band 102, Nr. 6, 11. Februar 1985, Seite 176, Zusammenfassung Nr. 48759f, Columbus, Ohio, US; & JP-A-59 157 974 (KAO CO.) 07-09-1984**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 239 846 B1**

(56) Entgegenhaltungen:
CHEMICAL ABSTRACTS, Band 102, Nr. 20, 20. Mai 1985, Seite 8, Zusammenfassung Nr. 167274d, Columbus, Ohio, US; R. LAZZARONI et al.: "Electrochemical synthesis of heteroaromatic polymers: new compounds and novel substrates", & MOL. CRYST. LIQ. CRYST. 1985, 118(1-4), 249-52

Erweiterte Zusammenfassung, Dechema Vortrag, Dechema Jahres Tagung der Biotechnologen 3. 4. October 1985

## Beschreibung

Es ist bekannt, daß sich Heteroaromaten bei anodischer Oxidation unter geeigneten Bedingungen polymerisieren lassen und dabei elektrisch leitende Polymere bilden, die für die Elektrotechnik, bei Halbleiterbauelementen, Schaltern, Abschirmungsmaterialien, Solarzellen und als Elektrodenmaterialien bei elektrochemischen Synthesen und in reversiblen Ladungsspeichern Interesse besitzen (vgl. z.B. IBM J. Res. Develop. *27*, 330 (1983)).

Ein großer Nachteil der meisten beschriebenen Produkte ist allerdings, daß sie als spröde Filme oder Pulver anfallen und infolge ihrer Unlöslichkeit und fehlender Thermoplastizität nicht in eine verarbeitbare Form gebracht werden können (vgl. z.B. J. Phys. Chem. *1983*, 2289). Eine Ausnahme bildet das Polypyrrol, das unter geeigneten Bedingungen als fester einigermaßen flexibler Film anfällt (vgl. z.B. DE-Offenlegungsschrift 32 26 278). Dennoch ist auch bei diesem Material die spätere Form schon bei der Synthese durch die Elektrodenform annähernd vorgegeben. Zudem besitzt es praktisch keine innere Oberfläche, sodaß für die obengenannten Anwendungen nur die geometrische Oberfläche zur Verfügung steht. Durch Einbau von Kohlefasern bzw. Geweben aus Kohlefasern in Polypyrrole kann die Zugfestigkeit erhöht werden (vgl. JP-Offenlegungsschrift 83-89 639). Die dadurch erhältlichen Verbundkörper sind jedoch wenig flexibel und besitzen außerdem nur eine relativ geringe spezifische Oberfläche. Für Anwendungen elektrisch leitender Polymerer, beispielsweise als Elektrode bei elektrochemischen Prozessen bzw. in Sekundärelementen, spielt neben der mechanischen Stabilität vor allem die Fähigkeit zum schnellen Ladungs- und Stofftransport eine wesentliche Rolle. Ein entscheidendes Kriterium für schnelle Austauschreaktionen ist dabei die zur Verfügung stehende spezifische Oberfläche.

Aufgabe der vorliegenden Erfindung war es daher, einen elektrisch leitfähigen Verbundkörper (Composite) aus Kohlefaserträger und elektrisch leitendem Polymeren sowie ein Verfahren zu dessen Herstellung bereitzustellen. Dieser sollte ausreichend flexibel sein und eine vergrößerte spezifische Oberfläche besitzen, wobei die spezifische Oberfläche des Trägermaterials selbst im üblichen Rahmen liegen soll.

Zur Lösung dieser Aufgabe schlägt die Erfindung einen elektrisch leitfähigen Verbundkörper gemäß Anspruch 1 vor.

Die Erfindung betrifft weiterhin ein Verfahren zur Herstellung dieser Verbundkörper durch Aufbringen eines elektrisch leitfähigen Polymeren auf einen Kohlenfaserträger mit einer spezifischen Oberfläche von kleiner als 100 $m^2/g$, dadurch gekennzeichnet, daß ein filzartiger Kohlenfaserträger eingesetzt wird.

Das Trägermaterial des erfindungsgemäßen Verbundkörpers besteht aus Kohlenstoff, einschließlich von Graphit, und soll eine filzartige Struktur aufweisen. Darunter sei hier eine Anordnung der faserartigen Bestandteile verstanden, die an allen drei Dimensionen eine möglichst gleichmäßige Raumerfüllung bietet, so daß weder ausgeprägte Hohlräume noch Bereiche mit einer Häufung von Faserbündeln entstehen.

Als Beispiele für derartige Trägermaterialien seien Kohlenstoff-Filze, insbesondere Kohlenstoff-Weichflize, Graphit-Filze und durch Kohlefasergewebe verstärkte Kohlenstoff-Filze genannt.

Eine zweidimensional orientierte Anordnung mit vielen Berührungspunkten und parallel zu Bündeln angeordneten Fasern, wie sie im Kohlefasergeweben vorkommt, führt zu ungleichmäßiger Abscheidung des leitenden Polymeren sowie zur Ausbildung von massiven Blöcken und damit zu einer Verringerung der spezifischen Oberfläche. Außerdem geht hierbei die Flexibilität weitgehend vorloren.

Das filzartige Kohlenstoff-Trägermaterial des erfindungsgemäßen Verbundkörpers besitzt eine spezifische Oberfläche von weniger als 100 $m^2/g$, vorzugsweise von 0,01 bis 10 $m^2/g$ und insbesondere von 0,1 bis 5 $m^2/g$, bestimmt nach BET (bei $>0,5$ $m^2/g$) bzw. berechnet nach der weiter unten angegebenen Formel.

Als elektrisch leitende Polymere kommen erfindungsgemäß grundsätzlich alle hierfür bekannten Produkte in Frage, wie sie beispielsweise im IBM J. Res. Develop. 27, S. 330 ff (1983) und im Research Report von IBM (Electrochemical Synthesis of Conducting Polymers; A. F. Diaz, J. Bargon), 23.11.1983) beschrieben sind. Sie sollen eine spezifische Leitfähigkeit bei Raumtemperatur von mindestens $10^{-5}$ $\Omega^{-1}cm^{-1}$, vorzugsweise mindestens $10^{-3}$ $\Omega^{-1}cm^{-1}$, besitzen und bei Raumtemperatur fest sein. Vorzugsweise bestehen diese Polymeren jedoch aus Struktureinheiten, die sich von den weiter unten angegebenen Monomeren der allgemeinen Formeln (I) und/oder (II) ableiten. Als Beispiele für derartige elektrisch leitende Polymere seien hier genannt: Poly(Pyrrol), Poly(3-Methylpyrrol), Poly(3,4-Dimethylpyrrol), Poly(N-Methylpyrrol), Poly(3-Chlorpyrrol), Poly(Thiophen), Poly(3-Methylthiophen), Poly(3,4-Dimethylthiophen), Poly(Thienothiophen), Poly(Thienopyrrol), Poly(Carbazol), Poly(1,2-Di-(2-thienyl)-ethen), Poly(1,2-Di-(3-methylthien-2-yl)ethen), Poly(1,2-Di-(2-furanyl)ethen), Poly(1-(2-Furanyl)-2-(2-thienyl)ethen), Poly(1-(2-Pyrrolyl)-2-(2-thienyl)ethen), Poly(1,4-Di-(2-thienyl)buta-1,3-dien), Poly(1,4-Di-(2-furanyl)buta-1,3-dien), Poly(1,4-Di-(2-thienyl)benzol), Poly(terthienyl(2,5-Di-(2-thienyl)thiophen)), Poly(2,5-Di(2-thienyl)-pyrrol) und Poly(2,2'-Di-thiophen).

Die Menge an elektrisch leitendem Polymeren, die mit dem Kohlefilz-Träger verbunden ist, beträgt abhängig von der Struktur des Matrixmaterials und der Dichte des elektrisch leitenden Polymeren in der Regel zwischen 5% und 80%, insbesondere zwischen 10% und 50%, bezogen auf den gesamten Verbundkörper.

Die Schichtdicke des elektrisch leitenden Polymeren auf dem Kohlefilzträger liegt zumeist zwischen 0,1 und 25 µm, vorzugsweise zwischen 1 und 6 µm. Auf diese Weise entsteht bei Einsatz des

erfindungsgemäßen Trägermaterials eine große geometrische Oberfläche des Verbundkörpers, da der mittlere Abstand zwischen den einzelnen Fasern des Filzes hinreichend groß ist und ein Zusammenwachsen durch das Polymere bei vorstehenden Schichtdicken nicht oder nicht in wesentlichem Umfange erfolgt. Vielmehr ist bei dem erfindungsgemäßen Verbundkörper der Polymerüberzug auf den Kohlefilzfasern recht gleichmäßig.

Der erfindungsgemäße Verbundkörper besitzt eine gegenbüber herkömmlichen Verbundkörpern aus Kohlenstoff-Fasern und leitenden Polymeren verbesserte Flexibilität. Dies zeigt sich darin, daß er den weiter unten beschriebenen Biegetest ohne Bruch übersteht.

Außerdem liegt die spezifische Oberfläche des erfindungsgemäßen Verbundkörpers im allgemeinen um den Faktor 2 bis 200, vorzugsweise 5 bis 100 und insbesondere 10 bis 50 höher als die spezifische Oberfläche des jeweiligen reinen Polymeren gleicher Grundfläche, so daß ein größerer Teil des leitenden Polymeren bei Verwendung als Elektrode in elektrochemischen Synthesen und in Sekundärelementen zur Verfügung steht. Die Bestimmung dieser spezifischen Oberfläche erfolgt durch Berechnung nach der weiter unten angegebenen Formel.

Weiterhin zeichnen sich die erfindungsgemäßen Verbundkörper durch hohe Stabilität aus, auch bei Verwendung elektrisch leitender Polymerer, die unter üblichen Abscheidungsbedingungen nur als Pulver oder spröde Filme anfallen, und weisen außerdem eine recht geringen spezifischen Widerstand auf, da durch das eingelagerte Kohlenstoffgerüst in Verbindung mit der innigen Kontaktierung zum leitenden Polymeren ein optimaler Ladungstransport stattfinden kann. Zumeist liegt daher der spezifische Widerstand im Bereich von 0,1 bis 100 $\Omega$ cm, vorzugsweise 1 bis 10 $\Omega$ cm, die spezifische Leitfähigkeit entsprechend bei 0,01 bis 10 $\Omega^{-1}cm^{-1}$, vorzugsweise 0,1 bis 1 $\Omega^{-1}cm^{-1}$.

Die Kombination dieser besonderen Eigenschaften, durch die sich der erfindungsgemäße Verbundkörper von den bekannten Verbundkörpern auf Basis von Kohlenfasern unterscheidet, ermöglichen den Einsatz dieses Verbundkörpers für Anwendungen, die neben schnellem Ladungs- und Stofftransport eine ungewöhnliche (z.B. extrem flache) Geometrie mit der Möglichkeit einer Anpassung an vorgegebene Strukturen verlangen. Daneben können sie aber auch in allen Bereichen, in denen die bisher bekannten elektrisch leitenden Polymeren Interesse finden, eingesetzt werden, z.B. als Katalysatoren, elektrische Schalter, Halbleiter-Bauteile, Abschirmmaterialien, Solarzellen, Flächenheizleitern sowie insbesondere als Elektroden für Elektrosynthesen und in reversiblen Ladungsspeichern (Batterien).

Die Herstellung des erfindungsgemäßen Verbundkörpers erfolgt in der Weise, daß auf das filzartige Trägermaterial das elektrisch leitende Polymere nach bekannten Polymerisations-Methoden aufgebracht wird. Vorzugsweise geschieht dies durch elektrochemische Polymerisation, insbesondere anodische Oxydation entsprechender Monomerer, wobei das filzartige Trägermaterial als Anode fungiert, unter den hierfür an sich bekannten Bedingungen.

Die elektrochemische Polymerisation der Monomeren bzw. der Comonomer-Mischungen wird dementsprechend in einem der üblichen Elektrolyt-Lösungsmittelsysteme durchgeführt, die unter den Bedingungen der elektrochemischen Polymerisation beständig und eine ausreichende Löslichkeit für das Monomere und das Leitsalz aufweisen müssen. Vorzugsweise finden dipolar aprotische Lösungsmittel wie Acetonitril, Propylencarbonat, Dimethylformamid, Dimethylsulfoxid und Nitromethan Verwendung. Es können aber auch andere Lösungsmittel wie Methylenchlorid oder Tetrahydrofuran eingesetzt werden. Ein Zusatz von 1% bis 5% Wasser ist in einigen Fällen günstig. Im Fall von Monomeren mit einem niedrigen Oxydationspotential, wie. z.B. Pyrrol, kann sogar aus wässrigen Dispersionen, gegebenenfalls unter Zusatz von Dispergiermitteln polymerisiert werden.

Die Monomerkonzentration beträgt in der Regel 0,001 bis 5 Mol, vorzugsweise 0,01 bis 1 Mol Monomere pro Liter Elektrolyt-Lösungsmittel.

Als Leitsalze, die insbesondere dem Stromtransport während der elektrochemischen Polymerisation dienen, aber auch in dem entstehenden Polymeren enthalten sind und dessen Eigenschaften mit beeinflussen, finden die üblichen Leitsalze Verwendung, wie sie beispielsweise in der DE-Offenlegungsschrift 3 226 278 erwähnt sind. Genannt seien hier als Beispiele Tetrafluorborate, Hexafluorarsenate, Hexafluorantimonate, Hexafluorphosphate, Hexachlorantimonate, Perchlorate, Hydrogensulfate und Sulfate. Geeignet sind auch aromatische und aliphatische Alkyl- und Arylsulfonate und perfluorierte Alkylsulfonate. Als Kationen für die Leitsalze kommen neben den Erdalkalimetallkationen und $H^{(+)}$ insbesondere die Alkalimetallkationen in Betracht. Als besonders günstig erweisen sich Kationen des Typs $R_4N^{(+)}$ bzw. $R_4P^{(+)}$, worin die Reste R jeweils unabhängig voneinander Wasserstoff und/oder niedere Alkylreste, cycloaliphatische oder aromatische Reste bedeuten. In einigen Fällen erweist sind eine Mischung aus $R_4N^{(+)}$ und $H^{(+)}$ als besonders günstig für die Gleichmäßigkeit und Haftfestigkeit der Polymerabscheidung. Die Menge an Leitsalz liegt im allgemeinen im Bereich von 0,001 bis 1 Mol, vorzugsweise 0,01 bis 0,5 Mol pro Liter Lösungsmittel.

Eine Verbesserung der Gleichmäßigkeit und Haftfestigkeit der Polymerabscheidung kann durch Zusatz von Säure zum Elektrolyten erzielt werden. Dies gilt insbesondere bei Verwendung der Monomeren gemäß der nachfolgenden Formel (II). Geeignet sind beispielsweise die den oben beschriebenen Leitsalzen zugrunde liegenden Säuren, insbesondere Perchlorsäure, Tetrafluorborsäure, Hexafluorphosphorsäure, Trifluormethansulfonsäure, Toluol- und Benzolsulfonsäure.

Die elektrochemische Polymerisation kann in den üblichen Zellen oder Elektrolyse-Apparaturen durchgeführt werden. Gut geeignet sind beispielsweise einfache Elektrolyse-Apparaturen, bestehend aus

einer ungeteilten Zelle, zwei oder mehr Elektroden und einer externen Stromquelle. Es können aber auch geteilte Zellen mit Diaphragmen oder Ionenaustauschermembranen oder solche mit Referenzelektroden zur exakten Potenialbestimmung eingesetzt werden. Die Messung der Strommenge ist zweckmäßig, da dieser die abgeschiedene Polymermenge und bei ein und demselben Trägermaterial auch der Schichtdicke proportional ist. Auf diese Weise kann die Dicke der Beschichtung auf den Kohlefasern kontrolliert werden. Eine Elektrolyse-Apparatur, bei der die Kathode flächig am Boden ausgebildet ist und die Anode in Form eines Bandes mit konstantem Vorschub durch den Elektrolyten geführt wird, ermöglicht eine kontinuierliche Verfahrensführung.

Als Anode werden dabei, wie erwännt, die filzartigen Materialien aus Kohlenstoff verwendet, die als Täger in dem erfindungsgemäßen Verbundköroper fungieren. Geeignet sind hierfür beispeilsweise Kohlenstoff-Filze, Kohlenstoff-Weichfilze bzw. Graphit-Filze unterschiedlicher Flexibilität, welche im Handel erhältlich sind, z.B. (R)Sigratherm KFA-, KFB-, GFD- oder PF-Typen. Dieses Anodenmaterial kann in beliebiger Form eingesetzt werden, vorzugsweise wird aber eine flächige Anordnung mit paralleler Ausrichtung zur Kathode gewählt, um eine möglichst gleichmäßige Ummantelung der Kohlefasern zu erreichen. Dazu wird das Anodenmaterial in einen nicht leitenden Rahmen eingespannt, der bevorzugt aus einem gegenüber dem Elektrolyten inerten Kunststoff besteht. Die Kohlefilz-Anode kann in dem Rahmen eingeklemmt und/oder mit Kunststoffschrauben eingeschraubt werden. Der Rahmen muß den ungehinderten Zutritt des Elektrolyten zur Anode gewährleisten und soll daher die Anode nur umranden bzw. Netzstruktur besitzen. Die Kontaktierung der Anode erfolgt durch eine oder mehrere Metall-Klemmen, die entweder außerhalb des Elektrolyten angebracht sind oder mit Ausnahme der Kontaktierungsfläche isoliert sind.

Die Art und Gestaltung der Kathode ist nicht kritisch, wobei eine oder mehrere Kathoden eingesetzt werden können. Die Kathode besteht aus einem der üblichen Elektrodenmaterialen wie z.B. Graphit, vorzugsweise jedoch aus Edelstahl oder Platin. Sie wird im allgemeinen parallel zur Anode angeordnet; bei Verwendung von zwei Kathoden befinden sich diese im gleichen Abstand vor und hinter der Anode. Diese parallele Anordnung von zwei Kathoden begünstigt die Gleichmäßigkeit der Polymerabscheidung. Falls nur eine Kathode eingesetzt wird, wirkt ein mehrfaches Wenden der Anode in gleicher Richtung.

Das Verfahren wird normalerweise bei Raumtemperatur durchgeführt, die Temperatur kann allerdings auch in einem breiten Bereich variiert werden, der nach unten durch die Erstarrungstemperatur und nach oben durch die Siedetemperatur des Elektrolyt-Lösungsmittels begrenzt wird und zumeist zwischen −50 und 80°C, vorzugsweise −10 und 40°C liegt.

Als Stromquellen für den Betrieb der elektrolytischen Zelle, in der das Verfahren durchgeführt wird, eignet sich jede Gleichstomquelle, die eine hinreichend hohe elektrische Spannung liefert. Üblicherweise wird die elektrochemische Polymerisation mit einer Spannung von 0,1 bis 100 Volt, vorzugsweise im Bereich von 1,5 bis 30 Volt betrieben. Für die Stromdichte haben sich Werte im Bereich von 0,01 bis 100 $mA/cm^2$, insbesondere im Bereich von 0,1 bis 10 $mA/cm^2$ als günstig und vorteilhaft erwiesen.

Die Dauer der Elektrolyse hängt u.a. von dem verwendeten Elektrolyt-System, den jeweiligen Elektrolyse-Bedingungen sowie insbesondere von der gewünschten Beschichtungsdicke ab. Überlicherweise beträgt die Elektrolysdauer 1 bis 12 Stunden, vorzugsweise 2 bis 8 Stunden.

Der bei der Elektrolyse erhaltene Verbundkörper wird zur Entfernung von anhaftendem Leitsalz mit Lösungsmitteln, vorzugsweise mit dem Elektrolyt-Lösungsmittel gewaschen und bei Temperaturen im Bereich von 20—150°C getrocknet, eventuell unter Vakuum. Elektrisch leitendes Polymeres, das an dem Verbundkörper nur locker anhaftet, kann mechanisch entfernt werden, z.B. durch vorsichtiges Abbürsten, durch Abblasen z.B. mit Druckluft oder durch Behandeln mit Ultraschall in einer inerten Flüssigkeit.

Als Monomere der auf dem Trägermaterial abzuscheidenen leitenden Polymeren eignen sich die hierfür bekannten Aromaten und Heteroaromaten. Vorzugsweise kommen hierfür jedoch Verbindugen der allgemeinen Formel (I)

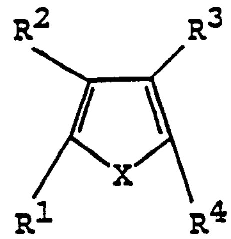

(I)

in Frage. Die Reste $R^2$ und $R^3$ sind darin jeweils unabhängig voneinander Wasserstoff, Halogen, $C_1$—$C_4$-Alkyl, Aryl, vorzugsweise Phenyl oder Thienyl, bzw. bilden miteinander einen aromatischen Ring, vorzugsweise einen Benzol-, Thiophen- oder Pyrrolring. Die Reste $R^1$ und $R^4$ sind jeweils unabhängig voneinander entweder Wasserstoff oder bilden mit $R^2$ bzw. $R^3$ einen aromatischen Ring, vorzugsweise einen Benzol-, Thiophen- oder Pyrrolring. X entspricht O, S, NH, N-Alkyl, vorzugsweise $N(C_1$—$C_4)$-Alkyl, oder N-Aryl, vorzugsweise N-Phenyl. Geeignet sind insbesondere Pyrrol, 3-Chlorpyrrol, 3-Methylpyrrol, 3,4-Dimethylpyrrol, N-Methylpyrrol, Thiophen, 3-Methylthiophen, 3,4-Dimethylthiophen, Thienothiophen, Thienopyrrol und Carbazol.

Als Monomere können auch Verbindungen der allgemeinen Formel (II) eingesetzt werden

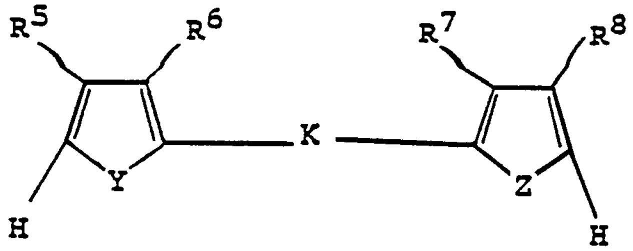

(II)

Die Reste, $R^5$, $R^6$, $R^7$, $R^8$ sind jeweils unabhängig voneinander Wasserstoff, $C_1$—$C_4$-Alkyl oder Aryl, vorzugsweise Phenyl oder Thienyl. Y und Z entsprechen unabhängig voneinander O, S, NH, N-Alkyl, vorzugsweise $N(C_1$—$C_4)$Alkyl, oder N-Aryl, vorzugsweise N-Phenyl. K steht für Aryl, vorzugsweise Phenyl, Heteroaryl, vorzugsweise Thienyl, Furanyl, Pyrrolyl oder ein konjugiertes System der Formel (III)

$$-(CH=CH)_n- \quad \text{(III)}$$

mit n = 0 bis 3.

Geeignet sind insbesondere 1,2-Di-(2-thienyl)ethen, 1,2-Di-(3-methylthien-2-yl)ethen, 1,2-Di-(2-furanyl)ethen, 1-(2-Furanyl)-2-(2-thienyl)ethen, 1-(2-Pyrrolyl)-2-(2-thienyl)ethen), 1,4-Di-(2-thienyl)buta-1,3-dien, 1,4-Di-(2-furanyl)buta-1,3-dien, 1,4-Di-(2-thienyl)benzol, Terthienyl(2,5-Di-(2-thienyl)thiophen), 2,5-Di-(2-thienyl)-pyrrol und 2,2'-Dithiophen.

Es können auch Mischungen der Monomeren eingesetzt werden, insbesondere auch Mischungen von Monomeren der Formel (I) mit solchen der Formel (II) sowie gegebenenfalls auch Gemische mit anderen damit copolymerisierbaren Verbindungen.

Die Erfindung wird durch nachfolgende Beispiele näher erläutert. Die in den Beispielen angegebenen Teile und Prozente beziehen sich, sofern nicht anders vermerkt, auf das Gewicht. Die minimale spezifische Oberfläche wurde nach folgender Formel errechnet, wobei die Größen R, D und Z aus REM-Aufnahmen bestimmt wurden:

$$A = \frac{2\pi(R + D)Z}{G}$$

A: spezifische Oberfläche [$m^2/g$]
R: Radius einer Kohlenstoffaser [m]
D: mittlere Dicke der Polymerschicht [m]
Z: mittlere Zahl der Fasern im Verbundkörper
G: Gewicht des Verbundkörpers [g]

Die spezifische Leitfähigkeit der Verbundkörper wurde mittels Vierpunktmessung an verschiedenen Stellen bestimmt, so daß, bedingt durch Zufälligkeiten in der mikroskopischen Struktur beim jeweiligen Meßpunkt, ein Leitfähigkeitsbereich erhalten wurde. Die Flexibilität wurde anhand eines Biegetests ermittelt, bei dem der Verbundkörper um einen Zylinder bestimmten Durchmessers aufgerollt und auf einen etwaigen Bruch hin untersucht wird. Das Kriterium der Flexibilität gilt als erfüllt, wenn der Quotient aus der Dicke des Verbundkörpers dividiert durch den Durchmesser des Zylinders, um den sich der Verbundkörper ohne Bruch aufrollen läßt, gleich oder größer $10^{-2}$, vorzugsweise gleich oder größer $5 \cdot 10^{-2}$, ist. Dies war bei den Verbundkörpern der erfindungsgemäßen Beispiele 1 bis 9 der Fall.

Beispiel 1

3,7 Teile Tri(n-butyl)amin, 7,6 Teile p-Toluolsulfonsäure-Hydrat, 1,34 Teile Pyrrol und 200 Teile Acetonitril wurden in eine ungeteilte Elektrolysezelle gegeben. Die Kathode bestand wahlweise aus Platin oder V2A-Stahl. Als Anode wurde ein Kohlenstoff-Filz (spezifische Oberfläche (BET) = ca. 0,5 $m^2/g$) Sigratherm KFB 2, Firma Sigri Elektrographit GmbH) parallel zur Kathode über einen Abstandshalter befestigt. Bei einer anodischen Stromdichte von 0,8 $mA/cm^2$ (beidseitige Anodenfläche) und einer Zellenspannung von 2,5 V erhielt man nach 4 Stunden Elektrolysedauer einen aus 66 Teilen Kohlenstoff und 34 Teilen Polypyrrol bestehenden, flexiblen Verbundkörper mit einer spezifischen Oberfläche von ca. 0,18 $m^2/g$ und einer spezifischen Leitfähigkeit von 0,2—1 $\Omega^{-1}cm^{-1}$. Die Dicke des Polypyrrol-Überzugs betrug 2—4 µm.

Beispiel 2

4,34 Teile Tetraethylammoniumtetrafluorborat, 1,34 Teile Pyrrol und 300 Teile Acetonitril wurden in eine ungeteilte Elektrolysezelle gegeben. Unter den Elektrolysebedingungen gemäß Beispiel 1 erhielt man nach 4 Stunden Elektrolysedauer einen aus 69 Teilen Kohlenstoff und 31 Teilen Polypyrrol bestehenden, flexiblen Verbundkörper mit einer spezifischen Oberfläche von ca. 0,18 $m^2/g$ und einer spezifischen Letifähigkeit von 0,2—1 $\Omega^{-1}cm^{-1}$. Die Dicke de Polypyrrol-Schicht betrug 2—4 µm.

### Beispiel 3

4,34 Teile Tetraethylammoniumtetrafluorborat, 1,34 Teile Pyrrol und 350 Teile Acetonitril wurden in eine ungeteilte Elektrolysezelle gegeben. Als Anode wurde ein Kohlefilz (spezifische Oberfläche (BET) 0,3—0,4 $m^2/g$) ("Sigratherm GFD") verwendet. In gleichem Abstand zu beiden Seiten der Anode wurde je eine V2A-Kathode angeordnet. Bei einer anodischen Stromdichte von 0,5 $mA/cm^2$ (beidseitige Anodenfläche) und einer Zellenspannung von 25 V erhielt man nach 4 Stunden Elektrolysedauer und anschließender Reinigung einen aus 57 Teilen Kohlenstoff und 43 Teilen Polypyrrol bestehenden, flexiblen Verbundkörper mit einer spezifischen Oberfläche von ca. 0,21 $m^2/g$ und einer spezifischen Leitfähigkeit von 0,2—1 $\Omega^{-1}cm^{-1}$. Die Polypyrrol-Überzug war 4—6 µm dick.

### Beispiel 4

4,34 Teile Tetraethylammoniumtetrafluorborat, 0,98 Teile 3-Methylthiophen und 200 Teile Acetonitril wurden in ungeteilter Zelle unter den Bedingungen gemäß Beispiel 1 elektrolysiert. Es wurde ein flexibler Verbundkörper erhalten, der aus 75% Kohlenstoff und 25% Poly(3-Methylthiophen) bestand. Seine spezifische Oberfläche lag bei ca. 0,16 $m^2/g$ und seine spezifische Leitfähigkeit bei 0,2—1 $\Omega^{-1}cm^{-1}$. Der Polymer-Überzug war 1—2 µm dick.

### Beispiel 5

4,34 Teile Tetraethylammoniumtetrafluorborat, 1,76 Teile 50%iger wäßrige Tetrafluorborsäure, 1,67 Teile Carbazol und 200 Teile Acetonitril wurden in einer ungeteilten Zelle gemäß Beispiel 1 elektrolysiert. Bei einer anodischen Stromdichte von 0,3 $mA/cm^2$ (beidseitige Anodenfläche) und einer Zellenspannung von 25 V erhielt man nach 8 Stunden Elektrolysedauer einen aus 60 Teilen Kohlenstoff und 40 Teilen Polycarbazol bestehenden, flexiblen Verbundkörper mit einer spezifischen Oberfläche von ca. 0,18 $m^2/g$ und einer spezifischen Leitfähigkeit von 0,2—1 $\Omega^{-1}cm^{-1}$. Die Dicke des Polycarbazol-Überzugs betrug 2—5 µm.

### Beispiel 6

4,34 Teile Tetraethylammoniumtetrafluorborat, 0,88 Teile 50%ige wäßrige Tetrafluoroborsäure, 0,96 Teile E-1,2-Di-(2-thienyl)ethen und 200 Teile Acetonitril wurden gemäß Beispiel 5 elektrolysiert. Nach 6 Stunden Elektrolysedauer wurde ein aus 64 Teilen Kohlenstoff und 36 Teilen Poly(1,2-Di(2-thienyl)ethen) bestehender, flexibler Verbundkörper mit einer spezifischen Oberfläche von ca. 0,15 $m^2/g$ und einer spezifischen Leitfähigkeit von 0,2—1 $\Omega^{-1}cm^{-1}$ erhalten. Die Schicht des leitenden Polymeren war dabei 1—3 µm dick.

### Beispiel 7

4,34 Teile Tetraethylammoniumtetrafluoroborat, 0,88 Teile 50%ige wäßrige Tetrafluoroborsäure, 0,80 Teile E-1,2-Di-(2-furanyl)ethen und 200 Teile Acetonitril wurden gemäß Beispiel 5 elektrolysiert. Nach 7 Stunden Elektrolysedauer erhielt man einen Verbundkörper aus 68 Teilen Kohlenstoff und 32 Teilen Poly(1,2-Di-(2-furanyl)ethen). Der flexible Verbundkörper besaß bei einer Schichtdicke des Polymeren von 1—2 µm eine spezifische Oberfläche von 0,13 $m^2/g$ und eine spezifische Leitfähigkeit von 0,2—1 $\Omega^{-1}cm^{-1}$.

### Beispiel 8

4,34 Teile Tetraethylammoniumtetrafluorborat, 0,88 Teile 50%ige wäßrige Tetrafluoroborsäure, 0.85 Teile E,E-1,4-Di-(2-thienyl)buta-1,3-dien und 200 Teile Acetonitril wurden gemäß Beispiel 5 elektrolysiert. Nach 5 Stunden Elektrolysedauer erhielt man einen Verbundkörper aus 77 Teilen Kohlenstoff und 23 Teilen Poly(1,4-Di(2-thienyl)-butadien). Der flexible Verbundkörper besaß bei einer Schichtdicke des Polymeren von 1—2 µm eine spezifische Oberfläche von ca. 0,10 $m^2/g$ und eine spezifische Leitfähigkeit von 0,2—1 $\Omega^{-1}cm^{-1}$.

### Beispiel 9

4,34 Teile Tetraethylammoniumtetrafluorborat, 0,88 Teile 50%ige wäßrige Tetrafluoroborsäure, 0,96 Teile 1,4-Di-(2-thienyl)benzol und 200 Teile Acetonitril wurden gemäß Beispiel 5 elektrolysiert. Nach 7 Stunden Elektrolysedauer erhielt man einen flexiblen Verbundkörper aus 66 Teilen Kohlenstoff und 34 Teilen Poly(1,4-Di-(2-thienyl)benzol). Der Verbundkörper besaß bei einer Schichtdicke des Polymeren von 2—4 µm eine spezifische Oberfläche von ca. 0,15 $m^2/g$ und eine spezifische Leitfähigkeit von 0,2—1 $\Omega^{-1}cm^{-1}$.

### Vergleichsversuch

3,01 Teile Tetraethylammonium-p-Toluolsulfonat, 0,97 Teile N-Methylpyrrol, 1 Teil Wasser und 200 Teile Acetonitril wurden in eine ungeteilte Elektrolysezelle gegeben. Als Kathode diente ein Platin-Blech, als Anode ein tuchartiges Flachgewebe aus Kohlefasern (7—8 µm Durchmesser) mit einer Länge von 25 mm und einer Breite von 20 mm. Die Elektropolymerisation erfolgte bei einer Stromstärke von 4 mA und einer Zellenspannung von 2—2,5 V. Nach 6 Stunden erhielt man einen Verbundkörper aus 80 Teilen Kohlenstoff und 20 Teilen Poly(N-methylpyrrol). Die Schichtdicke des Polymeren betrug an freistehenden Kohlefasern 1—2 µm und die spezifische Leitfähigkeit 0,2—1 $\Omega^{-1}cm^{-1}$.

Trotz einer Beschichtungsdicke von nur maximal 2 μm konnte die spezifische Oberfläche des erhaltenen Verbundkörpers nicht nach der obigen Formel errechnet werden, da große Bereiche der Faserbündel zusammengewachsen waren.

Die Flexibilität des Verbundkörpers reichte nicht aus, um den weiter oben beschriebenen Biegetest zu bestehen.

**Patentansprüche für die Vertragsstaaten: BE CH DE FR GB IT LI LU NL SE**

1. Elektrisch leitfähiger Verbundkörper aus einem Kohlefaserträger mit einer spezifischen Oberfläche von kleiner als 100 $m^2/g$ und einem elektrisch leitfähigen Polymeren, das im wesentlichen Struktureinheiten enthält, die sich von mindestens einem Monomeren der nachstehenden allgemeinen Formel (I) ableiten

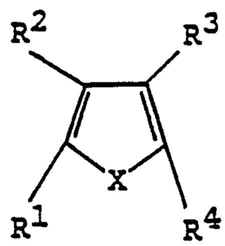

(I),

in der $R^2$ und $R^3$ jeweils unabhängig voneinander Wasserstoff, Halogen, $C_1$—$C_4$-Alkyl, Aryl darstellen oder miteinander einen aromatischen Ring bilden und $R^1$ und $R^4$ unabhängig voneinander entweder Wasserstoff sind oder mit $R^2$ bzw. $R^3$ einen aromatischen Ring bilden, und X für O, S, NH, N-Alkyl, N-Aryl steht, und/oder sich von mindestens einem Monomeren der nachstehenden allgemeinen Formel (II) ableiten

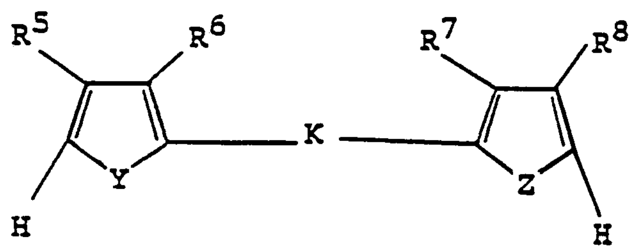

(II),

in der $R^5$, $R^6$, $R^7$, $R^8$ jeweils unabhängig voneinander Wasserstoff, Alkyl, Aryl sind und Y sowie Z unabhängig voneinander O, S, NH, N-Alkyl, N-Aryl darstellen und K Aryl, Heteroaryl oder ein konjugiertes System der Formel (III) ist

$$-(CH=CH)_n- \qquad (III)$$

mit n = 0 bis 3, wobei das leitende Polymer dotiert ist und Anionen enthält und wobei die spezifische Oberfläche des Verbundkörpers größer ist als die des elektrisch leitfähigen Polymeren, dadurch gekennzeichnet, daß der Verbundkörper flexibel und der Kohlefaserträger filzartig ausgebildet ist.

2. Elektrisch leitfähiger Verbundkörper nach Anspruch 1, dadurch gekennzeichnet, daß die spezifische Oberfläche des Verbundkörpers 2- bis 200-fach höher liegt als die des elektrisch leitfähigen Polymeren gleicher Grundfläche.

3. Elektrisch leitfähiger Verbundkörper nach Anspruch 1, dadurch gekennzeichnet, daß die Schichtdicke des elektrisch leitfähigen Polymeren auf den Kohlefasern 0,1—25 μm beträgt.

4. Verfahren zur Herstellung von elektrisch leitfähigen Verbundkörpern nach Anspruch 1 durch Aufbringen eines der in Anspruch 1 aufgelisteten elektrisch leitfähigen Polymeren auf einen Kohlefaserträger mit einer spezifischen Oberfläche von kleiner als 100 $m^2/g$, dadurch gekennzeichnet, daß ein filzartiger Kohlefaserträger eingesetzt wird.

5. Verfahren nach Anspruch 4, dadurch gekennzeichnet, daß das Aufbringen des elektrisch leitfähigen Polymeren durch elektrochemische Polymerisation entsprechender Monomerer erfolgt, wobei der filzartige Kohlefaserträger als Anode geschaltet ist.

6. Verfahren nach Anspruch 5, dadurch gekennzeichnet, daß die elektrochemische Polymerisation in Gegenwart eines Leitsalzes und einer Säure erfolgt.

7. Verwendung der elektrisch leitfähigen Verbundkörper nach Anspruch 1 als Katalysatoren, elektrische Schalter, Halbleiterbauelemente, Abschirmmaterialien oder als Elektroden in reversiblen Ladungsspeichern und bei elektrochemischen Synthesen.

**Patentansprüche für die Vertragsstaaten: ES AT**

1. Verfahren zur Herstellung elektrisch leitfähiger Verbundkörper aus einem Kohlefaserträger mit einer spezifischen Oberfläche von kleiner als 100 $m^2/g$ und einem elektrisch leitfähigen Polymeren, das im wesentlichen Struktureinheiten enthält, die sich von mindestens einem Monomeren der allgmeinen Formel (I) ableiten

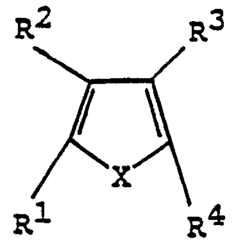

(I),

in der $R^2$ und $R^3$ jeweils unabhängig voneinander Wasserstoff, Halogen, $C_1$—$C_4$-Alkyl, Aryl darstellen oder miteinander einen aromatischen Ring bilden und $R^1$ und $R^4$ unabhängig voneinander entweder Wasserstoff sind oder mit $R^2$ bzw. $R^3$ einen aromatischen Ring bilden, und X für O, S, NH, N-Alkyl, N-Aryl steht, und/oder sich von mindestens einem Monomeren der allgemeinen Formel (II) ableiten

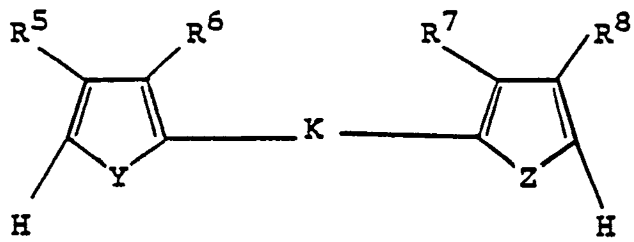

(II),

in der $R^5$, $R^6$, $R^7$, $R^8$ jeweils unabhängig voneinander Wasserstoff, Alkyl, Aryl sind und Y sowie Z unabhängig voneinander O, S, NH, N-Alkyl, N-Aryl darstellen und K Aryl, Heteroaryl oder ein konjugiertes System der Formel (III) ist

$$\left( CH=CH \right)_n \qquad (III)$$

mit n = 0 bis 3, wobei das leitende Polymer dotiert ist und Anionen enthält und wobei die spezifische Oberfläche des Verbundkörpers größer ist als die des elektrisch leitfähigen Polymeren, wobei der Verbundkörper flexibel ist, durch Aufbringen eines elektrisch leitfähigen Polymeren auf einen Kohlefaserträger, dadurch gekennzeichnet, daß ein filzartiger Kohlefaseträger eingesetzt wird.

2. Verfahren nach Anspruch 1, dadurch gekennzeichnet, daß das Aufbringen des elektrisch leitfähigen Polymeren durch elektrochemische Polymerisation entsprechender Monomerer erfolgt, wobei der filzartige Kohlefaserträger als Anode geschaltet ist.

3. Verfahren nach Anspruch 1, dadurch gekennzeichnet, daß als Monomere der Formel (I) Pyrrol verwendet wird.

4. Verfahren nach Anspruch 2, dadurch gekennzeichnet, daß die elektrochemische Polymerisation in Gegenwart eines Leitsalzes und einer Säure erfolgt.

5. Verwendung der nach Anspruch 1 hergestellten elektrisch leitfähigen Verbundkörper als Katalysatoren, elektrische Schalter, Halbleiterbauelemente, Abschirmmaterialien oder als Elektroden in reversiblen Ladungsspeichern und bei elektrochemischen Synthesen.

**Revendications pour les Etats contractants: BE CH DE FR GB IT LI LU NL SE**

1. Corps composite électriquement conducteur, constitué d'un support en fibres de carbone ayant une surface spécifique inférieure à 100 $m^2/g$ et d'un polymère électriquement conducteur, qui contient pour l'essentiel des motifs structurels dérivés d'au moins un monomère répondant à la formule générale (I)

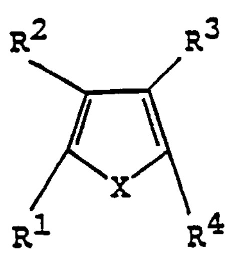

(I),

(dans laquelle $R^2$ et $R^3$ représentent chacun, indépendamment l'un de l'autre, un atome d'hydrogène, un atome d'halogène, un groupe alkyle en $C_1$ à $C_4$, un groupe aryle ou bien ils forment ensemble un noyau aromatique, et $R^1$ et $R^4$ représentent, indépendamment l'pun de l'autre, un atome d'hydrogène ou bien ils forment, avec $R^2$ ou $R^3$, un noyau aromatique, et X représente O, S, NH, un groupe N-alkyle ou N-aryle, et/ ou ils dérivent d'au moins un monomère répondant à la formule générale (II) suivante:

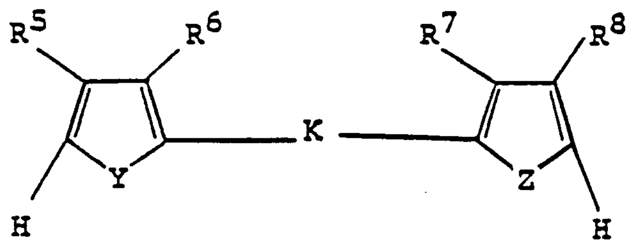

(II),

(dans laquelle $R^5$, $R^6$, $R^7$ et $R^8$ représentent chacun, indépendamment l'un de l'autre, un atome d'hydrogène, un groupe alkyle ou aryle et Y ainsi que Z représentent, indépendamment l'un de l'autre, O, S, un groupe NH, N-alkyle, N-aryle, et K représente un groupe aryle, hétero-aryle ou un système conjugué de formule (III)

$$-(CH=CH)_{\overline{n}} \qquad (III)$$

dans laquelle n vaut 0 à 3), le polymère conducteur étant dopé et contenant des anions, et la surface spécifique du corps composite étant supérieure à celle du polymère électriquement conducteur, corps caractérisé en ce que ce corps composite est flexible et en ce que le support en fibres de carbone est du type feutre.

2. Corps composite électriquement conducteur selon la revendication 1, caractérisé en ce que la surface spécifique du corps composite est supérieure de 2 à 200 fois à celle du polymère électriquement conducteur de même surface de base.

3. Corps composite électriquement conducteur selon la revendication 1, caractérisé en ce que l'épaisseur de la couche du polymère électriquement conducteur est de 0,1 à 25 µm sur les fibres de carbone.

4. Procédé de préparation de corps composites électriquement conducteurs selon la revendication 1, par application d'un polymère électriquement conducteur, indiqué à la revendication 1, constitué d'un support en fibres de carbone ayant une surface spécifique inférieure à 100 $m^2/g$, procédé caractérisé en ce qu'on utilise un support en des fibres de carbone en un genre de feutre.

5. Procédé selon la revendication 4, caractérisé en ce que l'application du polymère électriquement conducteur a lieu par polymérisation électrochimique de monomères correspondants, le support en fibres de carbone en forme de feutre étant monté de façon à constituer une anode.

6. Procédé selon la revendication 5, caractérisé en ce que la polymérisation électrochimique a lieu en présence d'un sel conducteur et d'un acide.

7. Utilisation des corps composites électriquement conducteurs selon la revendication 1 à titre de catalyseurs, de commutateurs ou interrupteurs électriques, de composants semi-conducteurs, de matériaux de blindage ou à titre d'électrodes dans des accumulateurs ou batteries réversibles et dans des synthèses électrochimiques.

**Revendications pour les Etats contractants: ES AT**

1. Procédé pour préparer un corps composite électriquement conducteur, à partir d'un support en fibres de carbone ayant une surface spécifique inférieure à 100 $m^2/g$ et d'un polymère électriquement conducteur, qui contient pour l'essentiel des motifs de structure dérivant d'au moins un monomère de formule générale (I)

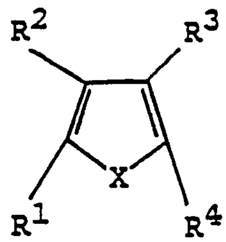

(I),

(dans laquelle $R^2$ et $R^3$ représentent chacun, indépendamment l'un de l'autre, un atome d'hydrogène, un atome d'halogène, un groupe alkyle en $C_1$ à $C_4$, un groupe aryle ou bien ils forment ensemble l'un avec

l'autre un noyau aromatique, et $R^1$ et $R^4$ représentent, indépendamment l'un de l'autre, un atome d'hydrogène ou bien ils forment, avec $R^2$ ou $R^3$, un noyau aromatique, et X représente O, S, un groupe NH, N-alkyle, N-aryle) et/ou dérivant d'au moins un monomère de formule générale (II):

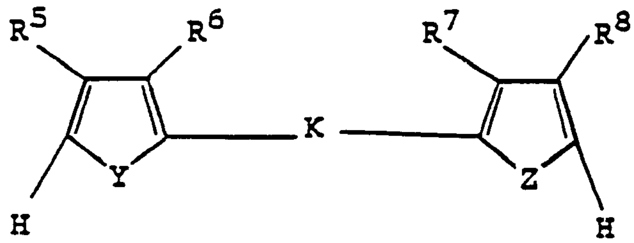

(II),

(dans laquelle $R^5$, $R^6$, $R^7$ et $R^8$ représentent chacun, indépendamment l'un de l'autre, un atome d'hydrogène, un groupe alkyle, un groupe aryle et Y ainsi que Z représentent, indépendamment l'un de l'autre, O, S, un groupe NH, N-alkyle, N-aryle, et K représente un groupe aryle, hétero-aryle ou un système conjugué de formule (III)

$$-(CH=CH)_n- \quad (III)$$

dans laquelle n vaut 0 à 3), le polymère conducteur étant dopé et contenant des anions, et la surface spécifique du corps composite étant supérieure à celle du polymère électriquement conducteur, et le corps composite étant flexible), par application d'un polymère électriquement conducteur sur un support en fibres de carbone, procédé caractérisé en ce qu'on utilise un support en fibres de carbone, du genre feutre.

2. Procédé selon la revendication 1, caractérisé en ce que l'application du polymère électriquement conducteur a lieu par polymérisation électrochimique du ou des monomères correspondants, le support en fibres de carbone, du genre feutre, étant monté en tant qu'anode.

3. Procédé selon la revendication 1, caractérisé en ce qu'on utilise, comme monomère de formule (I), du pyrrole.

4. Procédé selon la revendication 2, caractérisé en ce que la polymérisation électrochimique a lieu en présence d'un sel conducteur et d'un acide.

5. Utilisation des corps composites, électriquement conducteurs, préparés selon la revendication 1, à titre de catalyseurs, d'interrupteurs ou commutateurs électriques, de composants semi-conducteurs, de matériaux de blindage ou à titre d'électrodes dans des accumulateurs ou batteries réversibles et dans des synthèses électrochimiques.

**Claims for the Contracting States: BE CH DE FR GB IT LI LU NL SE**

1. An electrically conductive composite comprising a carbon fiber carrier having a specific surface of less than 100 $m^2/g$ and an electrically conductive polymer which substantially contains structural units which are derived from at least one monomer of the formula (I) below

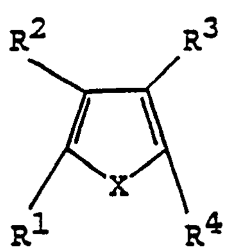

(I),

in which $R^2$ and $R^3$ are, in each case, independently of each other, hydrogen, halogen, $C_1$—$C_4$-alkyl or aryl or form an aromatic ring with each other, and $R^1$ and $R^4$, independently of each other, are either hydrogen or form an aromatic ring with $R^2$ or $R^3$, and X is O, S, NH, N-alkyl or N-aryl, and/or are derived from at least one monomer of the formula II below

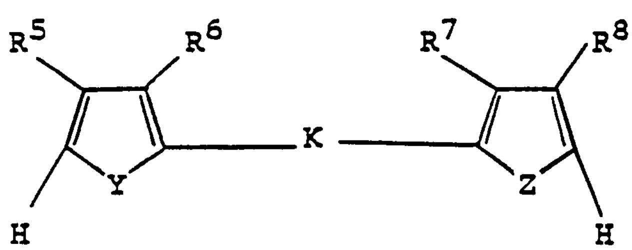

(II),

in which $R^5$, $R^6$, $R^7$ and $R^8$ are, in each case, independently of each other, hydrogen, alkyl or aryl, and Y and

also Z are, independently of each other, O, S, NH, N-alkyl or N-aryl, and K is aryl, heteroaryl or a conjugated system of the formula (III)

$$(CH{=}CH)_n \qquad (III)$$

with n = 0 to 3, the conducting polymer being doped and containing anions, and the specific surface of the composite being greater than that of the electrically conductive polymer, wherein the form of the composite is flexible and that of the carbon-fiber carrier is felt-like.

2. An electrically conductive composite as claimed in claim 1, wherein the specific surface of the composite is 2 to 200 times greater than that of the electrically conductive polymer of the same surface area.

3. An electrically conductive composite as claimed in claim 1, wherein the layer thickness of the electrically conductive polymer on the carbon fibers is 0.1—25 μm.

4. A process for manufacturing electrically conductive composites as claimed in claim 1 by applying one of the electrically conductive polymers listed in claim 1 to a carbon-fiber carrier with a specific surface of less than 100 $m^2/g$, which comprises using a felt-like carbon-fiber carrier.

5. The process as claimed in claim 4, wherein the application of the electrically conductive polymer is carried out by electrochemical polymerization of corresponding monomers, the felt-like carbon-fiber carrier being connected as anode.

6. The process as claimed in claim 5, wherein the electrochemical polymerization is carried out in the presence of a conducting salt and an acid.

7. The use of the electrically conductive composites as claimed in claim 1 as catalysts, electrical switches, semiconductor components, screening materials or as electrodes in reversible charge storage devices and in electrochemical syntheses.

**Claims for the Contracting States: ES AT**

1. A process for manufacturing electrically conductive composites comprising a carbon fiber carrier having a specific surface of less than 100 $m^2/g$ and an electrically conductive polymer, which substantially contains structural units which are derived from at least one monomer of the formula (I) below

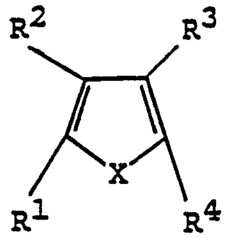

(I),

in which $R^2$ and $R^3$ are, in each case, independently of each other, hydrogen, halogen, $C_1$—$C_4$-alkyl or aryl or form an aromatic ring with each other, and $R^1$ and $R^4$, independently of each other, are either hydrogen or form an aromatic ring with $R^2$ or $R^3$, and X is O, S, NH, N-alkyl or N-aryl, and/or are derived from at least one monomer of the formula II below

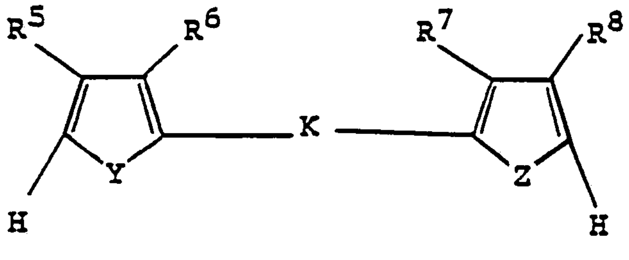

(II),

in which $R^5$, $R^6$, $R^7$ and $R^8$ are, in each case, independently of each other, hydrogen, alkyl or aryl, and Y and also Z are, independently of each other, O, S, NH, N-alkyl or N-aryl, and K is aryl, heteroaryl or a conjugated system of the formula (III)

$$(CH{=}CH)_n \qquad (III)$$

with n = 0 to 3, the conducting polymer being doped and containing anions, and the specific surface of the composite being greater than that of the electrically conductive polymer, the composite being flexible, by applying an electrically conductive polymer to a carbon-fiber carrier, which comprises using a felt-like carbon-fiber carrier.

2. The process as claimed in claim 1, wherein the application of the electrically conductive polymer is carried out by electrochemical polymerization of corresponding monomers, the felt-like carbon-fiber carrier being connected as anode.

3. The process as claimed in claim 1, wherein pyrrole is used as monomer of the formula (I).

4. The process as claimed in claim 2, wherein the electrochemical polymerization is carried out in the presence of a conducting salt and an acid.

5. The use of the electrically conductive composites manufactured as claimed in claim 1 as catalysts, electrical switches, semiconductor components, screening materials or as electrodes in reversible charge storage devices and in electrochemical syntheses.